# DEMANDE DE BREVET EUROPEEN

(11) **EP 2 299 109 A1**
(43) Date de publication de la demande: **23.03.2011**
(21) Numéro de dépôt: 10290329.1
(22) Date de dépôt: 16.06.2010
(51) Int. Cl.: F03D 3/00, F03D 11/00, F03B 11/00, F03D 3/04

(54) **Dispositif pour réaliser un isolement des pales creuses qui remontent le courant du fluide pour une éolienne ou une hydrolienne à axe vertical**

(30) Priorité: 29.06.2009 FR 0903200
(71) Demandeur: Le Ster, Gerard, 29800 Landerneau (FR)
(72) Inventeur: Le Ster, Gerard, 29800 Landerneau (FR)

(57) **Abrégé**

Dispositif pour réaliser un isolement des pales creuses qui remonte le courant du fluide pour une éolienne ou une hydrolienne à axe vertical.
Ce dispositif se compose d'un carter en deux parties (5) et (6).
Ce carter est fixé sur le support (3) de l'ensemble.
Actuellement les éoliennes ou hydroliennes à axe vertical sont peu utilisé du fait d'une perte d'énergie par les pales creuses qui remontent le courant du fluide.
La simplicité de l'invention permet de remédier à cette perte d'énergie.
L'invention peut être utilisée pour toutes les éoliennes ou hydroliennes à axe vertical, avec un avantage particulier pour l'hydrolienne à axe vertical qui du fait de sa conception tourne dans un plan horizontal et profite au mieux d'une faible profondeur d'eau.

## Description

La présente invention concerne un dispositif d'isolement des pales creuses qui remonte le courant du fluide pour des éoliennes ou des hydroliennes à axe verticale .

Les grandes éoliennes à axe horizontal qui développe une puissance de 1 mégawatt, avec une envergure d'environ 80 mètres, et une hauteur allant jusqu'à 150 mètres ont une vitesse linéaire en bout de pale qui peut être vingt fois supérieure à la vitesse du vent, donc un coefficient λ >20, d'où le constat de nuisances sonores.

Les hydroliennes à axe horizontal et à hélices sont pénalisées par la hauteur de leurs hélices.

Les éoliennes et les hydroliennes à axe vertical sont peut utilisées du fait que les pales creuses qui remontent le sens du fluide consomment beaucoup d'énergie

Le dispositif selon l'invention permet d'avoir un carter de protection, ou d'isolement simple avec le moins de pièces possible pour plus de fiabilité. Ce carter isole les pales creuses qui remontent le courant de l'eau ou de l'air du courant de ce fluide lui-même, d'où une perte d'énergie en moins. Le carter se positionne dans le sens du fluide grâce à son empennage vertical.
La FG. 1 représente une roue d'éolienne à axe vertical avec le carter qui isole les pales creuses qui remontent au vent.

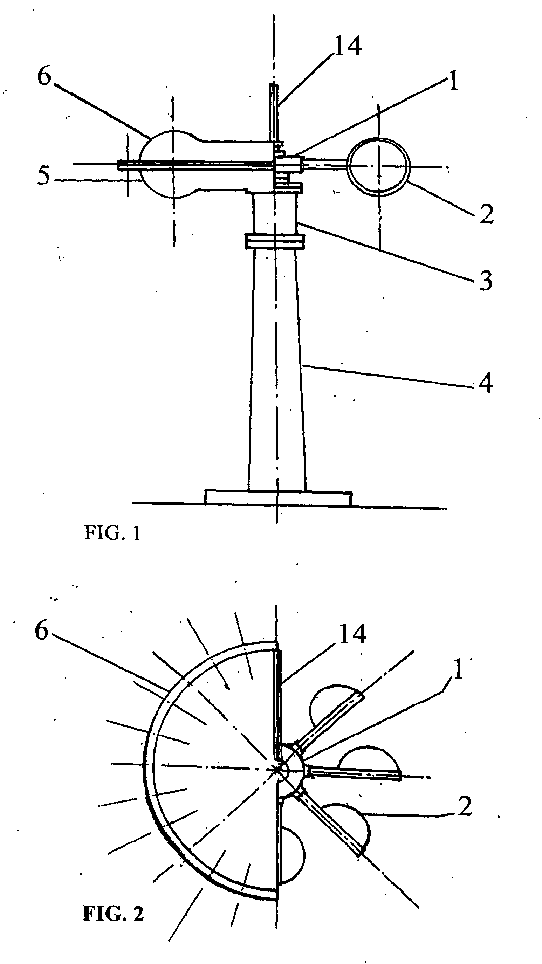

La FIG.2 représente une roue avec 8 pales creuses en forme de demi sphère. Les quatre pales creuses qui remontent au sens du fluide sont à l'abri dans le carter.

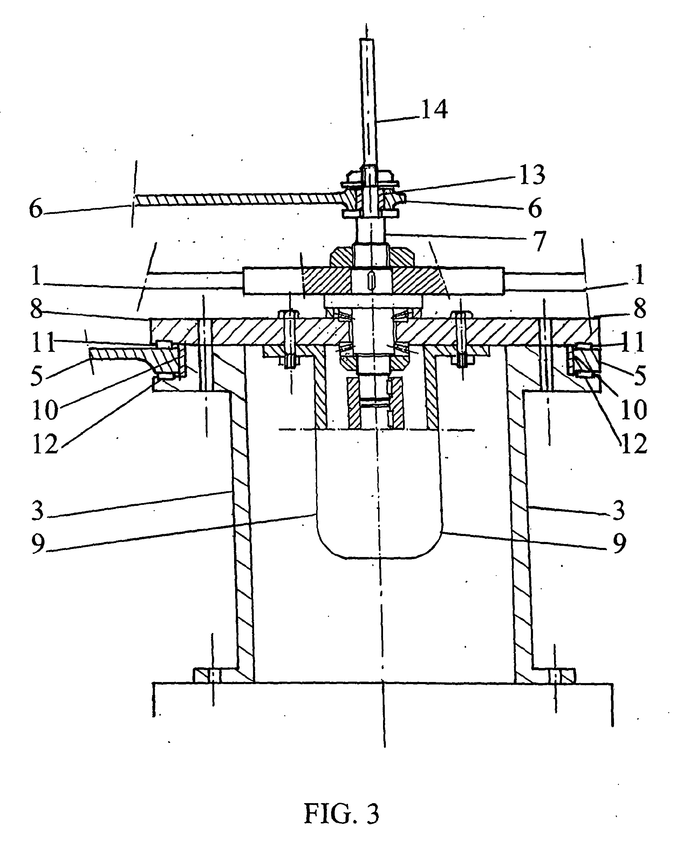

Les FIG. 3 montrent les détails du montage de l'invention.

Le dispositif comporte en effet selon une première caractéristique une couronne (5) sur laquelle est soudé le carter inférieur (5) qui fait la moitié de la circonférence de cette couronne. Cette couronne et ce carter inférieur (5) sont donc en une seule pièce.Cette couronne (5) est maintenu par la platine (8) et le support de l'ensemble (3).

Selon des modes particuliers de réalisation ce carter est soudé ou riveté sur cette couronne (5) ou rendu solidaire par d'autre système.

Cette couronne (5) tourne librement autour du support (3) grâce à la bague bronze (10) et aux cages à aiguilles (11) et (12). Selon des modes particuliers de réalisation d'autre appareillage de roulements (10) (11) (12) sont possible.

une fois que la couronne (5) et son demi carter sont montés sur le support (3) ainsi que la platine (8) équipée de sa roue (1) et de sa génératrice électrique (9), il est possible de fixer le demi carter supérieur (6) sur le carter (5) et de le centrer sur l'axe de la roue (7).

Le demi carter supérieur (6) est guidé en rotation sur l'axe de la roue (7) grâce à la bague bronze (13) et est maintenu en translation par un écrou avec bague d'arrêt.

Le maintien du carter (6) sur l'axe (7) est fait pour prévenir d'une déformation. Le carter ne tourne que pour suivre le changement de direction du fluide : vent ou courant marin.

Selon des modes particuliers de réalisation les carters (5) et (6) peuvent être fixes et non mobiles en rotation dans les sites marins ou fluviaux où les courants sont constants dans leur direction. Pour assurer le changement de direction du carter mobile un empennage (14) est fixé sur la moitié de sa partie supérieure (6).

Toutes les pièces sont fabriquées en matériaux inoxydables.

Les applications industrielles de ce carter sont valables pour toutes les éoliennes ou hydroliennes à axe vertical.

Il y a un avantage particulier pour l'hydrolienne à axe vertical qui du fait de sa conception tourne dans un plan horizontal et profite au mieux d'une faible profondeur d'eau. Autre élément important : la masse volumique de l'eau est de 1 000 kG par mètre cube, alors que c'elle de l'air de 1,20 kG par mètre cube. Cette hydrolienne peut travailler avec les courants constants fluviaux et marins, ainsi qu'avec le flux et reflux des marées.

## Revendications

1. dispositif d'isolement des pales creuses d'une roue (1) d'éolienne ou d'hydrolienne à axe vertical **caractérisé en ce qu'**il se compose d'un carter en deux parti, inférieur (5) et supérieur (6) surmonté d'un empennage (14) qui positionne l'ensemble. Ce montage permet d'isoler les pales creuses qui remontent sur 180° le vent ou le courant marin de la force même de ce vent ou courant marin, ce qui évite les pertes d'énergies.
